# EUROPÄISCHE PATENTSCHRIFT

(11) **EP 1 109 860 B1**
(45) Veröffentlichungstag und Bekanntmachung des Hinweises auf die Patenterteilung: **02.01.2003**
(21) Anmeldenummer: 99944455.7
(22) Anmeldetag: 20.08.1999
(51) Int. Cl.: C08L 25/12, C08L 51/00, B29C 47/06

(54) **ASA-FORMMASSEN ZUR HERSTELLUNG MATTER FORMTEILE**
ASA MOULDING COMPOUNDS FOR PRODUCING SHAPED PARTS
MATIERE MOULABLE ASA POUR LA PRODUCTION DE PIECES DE MOULAGE MATES

(30) Priorität: 20.08.1998 DE 19837854
(43) Veröffentlichungstag der Anmeldung: 27.06.2001
(73) Patentinhaber: BASF AKTIENGESELLSCHAFT, 67056 Ludwigshafen (DE)
(72) Erfinder: GÖRRISSEN, Heiner, D-67069 Ludwigshafen (DE); MORGENSTERN, Herbert, D-67158 Ellerstadt (DE); MC KEE, Graham, Edmund, D-67433 Neustadt (DE)
(74) Vertreter: Isenbruck, Günter, Dr.
(86) Internationale Anmeldenummer: EP9906114
(87) Internationale Veröffentlichungsnummer: WO00011080

(56) Entgegenhaltungen:
- EP-A- 0 244 856
- EP-A- 0 244 857
- EP-A- 0 576 960
- WO-A-98/32796
- WO-A-99/15589

## Beschreibung

Die Erfindung betrifft thermoplastische Formmassen aus einem Polystyrol-Acrylnitril-Polymer und einem mehrphasigen vernetzten Kautschuk, daraus hergestellte Formstoffe sowie Verfahren zur Herstellung von Formstoffen durch Coextrusion.

In bestimmten Anwendungsbereichen thermoplastischer Polymermaterialien, insbesondere bei der Automobil-Innenausstattung, bei Haushalts-, Elektro- und Sportgeräten, wird in zunehmendem Maße eine blendfreie, matte Oberfläche gewünscht, wofür dekorative Gründe oder auch Sicherheitsaspekte, z.B. verminderte Blendung des Autofahrers und verbesserte Gebrauchseigenschaften-Fingerabdrücke sind auf matten Flächen kaum sichtbar - zu nennen sind. Die meisten handelsüblichen schlagzäh modifizierten Formmassen liefern jedoch Formkörpern mit glänzender Oberfläche.

Matte Formteile lassen sich durch Behandlung der Oberfläche des fertigen, normalen Glanz aufweisenden Formteils erzielen, beispielsweise durch mechanisches Aufrauhen wie Schleifen und Bürsten, durch Ätzen, Anlösen und Quellen oder durch Aufbringen einer matten Überzugsschicht. Allen Verfahren gemeinsam ist jedoch der Nachteil eines zusätzlichen Arbeitsschrittes am fertigen Formteil.

Ferner kann man zur Herstellung von Formteilen mit matter Oberfläche auch Preßund Formwerkzeuge mit strukturierter Oberfläche verwenden, jedoch wird die Struktur des Werkzeugs verhältnismäßig schnell abgenutzt.
Der Zusatz anorganischer Mattierungsmittel wie Kieselgel oder Kreide zu Polymeren hat den Nachteil, daß die mechanischen Eigenschaften der Formkörper beeinträchtigt werden.

Dieser negative Effekt läßt sich durch den Zusatz geeigneter organischer Mattierungsmittel vermeiden. Sie bestehen aus Partikeln vergleichsweise großen Durchmessers (D > etwa 0,5 µm) die in Matrixpolymeren dispergiert sind. Die Partikel treten etwas aus der glatten und damit glänzenden Oberfläche des Matrixpolymers heraus und bewirken auf diese Weise eine diffuse Reflexion des auftretenden Lichtes (Streuung), wodurch die Oberfläche dem Betrachter matt erscheint.

Für viele Anwendungen sind matte und gleichzeitig schlagzähe Polymere gefordert. Soll ein hartes, sprödes Polymeres in einem Arbeitsgang derart modifiziert werden, müssen die großen, mattierenden Partikel zugleich kautschukelastische Eigenschaften haben. Um die mattierenden Kautschukpartikel mit dem nichtelastischen Matrixpolymeren verträglich oder zumindest teilverträglich zu machen, sind erstere zumeist mit einer Pfropfhülle aus einem solchen verträglichen oder teilverträglichen Polymeren versehen.

Derartige kautschukelastische und zugleich mattierende Pfropfpolymerisate großen Teilchendurchmessers sind aus der EP-A 269 324 bekannt. Jedoch ist das Verfahren zur Herstellung der Teilchen sehr umständlich. Hiemach werden in einem ersten Schritt kautschukelastische Kem-Partikel hergestellt, die im folgenden Schritt mit frisch zugegebenem Monomeren gequollen werden, wonach man die Polymerisation fortsetzt. Dieser Vorgang wird gegebenenfalls bis zum Erreichen der gewünschten Teilchengröße wiederholt, wonach dann die Pfropfhülle erzeugt wird.

Gemäß der EP-A 576 960 besteht ein anderer Weg zur Erzielung matter, schlagzäher Formmassen darin, größere Teilchen durch Agglomeration von kleinen Teilchen solcher Pfropfpolymere zu erzeugen, die im Pfropfkern saure und in der Hülle basische Gruppen enthalten oder umgekehrt. Dem hierdurch zu erzielenden Mattierungseffekt sind in manchen Fällen jedoch Grenzen gesetzt.

Zusätzlich wird bezüglich der Oberflächeneigenschaften polymerer Formstoffe in der Regel die Forderung gestellt, daß diese gleichförmig, frei von Fließlinien, Schlieren oder Markierungen sei.

Es ist Aufgabe der Erfindung, thermoplastische Formmassen mit verbesserten Oberflächeneigenschaften zur Verfügung zu stellen, die zugleich matt und frei von Fließlinien sind.

Die Lösung geht aus von thermoplastischen Formmassen enthaltend
A) 20 bis 90 Gew.-%, bevorzugt 30 bis 80 Gew.-%, besonders bevorzugt 40 bis 75 Gew.-% eines therrnoplastischen Polymers, aufgebaut aus Einheiten, die sich ableiten von
   a1) 60 bis 85 Gew.-%, bevorzugt 63 bis 81 Gew.-%, besonders bevorzugt 65 bis 80 Gew.-% Styrol und/oder substituiertes Styrol, insbesondere α-Methylstyrol,
   a2) 15 bis 40 Gew.-%, bevorzugt 19 bis 37 Gew.-%, besonders bevorzugt 20 bis 35 Gew.-% Acrylnitril und
   a3) 0 bis 25 Gew.-%, bevorzugt 0 bis 20 Gew.-%, besonders bevorzugt 0 bis 18 Gew.-% weiteren mit a1 und a2 copolymerisierbaren Monomeren, und
B) 10 bis 80 Gew.-%, bevorzugt 20 bis 70 Gew.-%, besonders bevorzugt 25 bis 60 Gew.-% eines mehrphasigen, vernetzten Pfropfkautschuks aufgebaut aus
   b1) 30 bis 90 Gew.-%, bevorzugt 40 bis 70 Gew.-%, besonders bevorzugt 45 bis 70 Gew.-% einer Phase, hergestellt durch Emulsionsoder Miniemulsionspolymerisation von
      b1.1) 80 bis 100 Gew.-%, bevorzugt 90 bis 100 Gew.-%, besonders bevorzugt 95 bis 100 Gew.-% eines Acrylats und
      b1.2) 0 bis 20 Gew.-%, bevorzugt 0 bis 10 Gew.-%, besonders bevorzugt 0 bis 5 Gew.-% weiteren Monomeren und
   b2) 10 bis 70 Gew.-%, bevorzugt 30 bis 60 Gew.-%, besonders bevorzugt 30 bis 55 Gew.-% mindestens einer weiteren Phase, hergestellt durch Polymerisieren von
      b2.1) 60 bis 85 Gew.-%, bevorzugt 70 bis 80 Gew.-% Styrol,
      b2.2) 15 bis 35 Gew.-%, bevorzugt 20 bis 30 Gew.-% Acrylnitril und
      b2.3) 0 bis 20 Gew.-% weitere Monomere in Gegenwart der ersten Phase.

Die erfindungsgemäßen thermoplastischen Formmassen sind dadurch gekennzeichnet, daß das Polymer A eine Viskositätszahl, gemessen als 0,5 %-ige Lösung in Dimethylformamid bei 23°C, von 50 bis 70 ml/g, bevorzugt von 55 bis 65 ml/g, aufweist und daß mindestens 80 Zahlen-%, bevorzugt mindestens 85 Zahlen-%, besonders bevorzugt mindestens 90 Zahlen-% der Kautschukteilchen B in der Dispersion nach ihrer Herstellung einen Durchmesser von < 0,2 µm, bevorzugt < 0,18 µm, besonders bevorzugt < 0,15 µm, besitzen.

Diese Produktklasse hat den Namen ASA, weil sie aus Acrylnitrit, Styrol und einem Acrylat besteht.
Es wurde überraschenderweise gefunden, daß bei der Verarbeitung von Formmassen aus einer Polystyrol-Acrylnitril-Matrix und darin eingebetteten vernetzten Kautschukteilchen eine rauhe Oberfläche, die das Licht streut und somit ein mattes Erscheinungsbild prägt, mit in der Polystyrol-Acrylnitril-Matrix dispergierten Kautschukteilchen kleinen Durchmessers erreicht wird und daß die Oberfläche der erhaltenen Formstoffe nach Coextrusion mit anderen Kunststoffen, insbesondere ABS, von Fließlinien frei ist, wenn eine leichtfließende Polystyrol-Acrylnitril-Matrix verwendet wird.

Die erfindungsgemäßen thermoplastischen Formmassen enthalten als Komponente A 20 bis 90 Gew.-%, bevorzugt 30 bis 80 Gew.-%, besonders bevorzugt 40 bis 75 Gew.-% eines thermoplastischen Polymers, aufgebaut aus Einheiten, die sich ableiten von
a1) 60 bis 85 Gew.-%, bevorzugt 63 bis 81 Gew.-%, besonders bevorzugt 65 bis 80 Gew.-% Styrol und/oder substituiertes Styrol, insbesondere α-Methylstyrol,
a2) 15 bis 40 Gew.-%, bevorzugt 19 bis 37 Gew.-%, besonders bevorzugt 20 bis 35 Gew.-% Acrylnitril und
a3) 0 bis 25 Gew.-%, bevorzugt 0 bis 20 Gew.-%, besonders bevorzugt 0 bis 18 Gew.-% weiteren mit a1 und a2 copolymerisierbaren Monomeren.

Bevorzugt werden als weitere Monomere a3) (Meth)acrylsäure und/oder ihre Derivate, insbesondere Methylmethacrylat, Acrylamid und/oder Methacrylamid sowie Maleinsäureanhydrid und /oder Phenylmaleinimid eingesetzt.

Die thermoplastischen Formmassen enthalten als Komponente B 10 bis 80 Gew.-%, bevorzugt 20 bis 70 Gew.-%, besonders bevorzugt 25 bis 60 Gew.-% eines mehrphasigen, vernetzten Pfropfkautschuks aufgebaut aus
b1) 30 bis 90 Gew.-%, bevorzugt 40 bis 70 Gew.-%, besonders bevorzugt 45 bis 70 Gew.-% einer Phase, hergestellt durch Emulsionsoder Miniemulsionspolymerisation von
   b1.1) 80 bis 100 Gew.-%, bevorzugt 90 bis 100 Gew.-%, besonders bevorzugt 95 bis 100 Gew.-% eines Acrylats und
   b1.2) 0 bis 20 Gew.-%, bevorzugt 0 bis 10 Gew.-%, besonders bevorzugt 0 bis 5 Gew.-% weiteren Monomeren und
b2) 10 bis 70 Gew.-%, bevorzugt 30 bis 60 Gew.-%, besonders bevorzugt 30 bis 55 Gew.-% mindestens einer weiteren Phase, hergestellt durch Polymerisieren von
   b2.1) 60 bis 85 Gew.-%, bevorzugt 70 bis 80 Gew.-% Styrol,
   b2.2) 15 bis 35 Gew.-%, bevorzugt 20 bis 30 Gew.-% Acrylnitril und
   b2.3) 0 bis 20 Gew.-% weitere Monomere in Gegenwart der ersten Phase.

Die Phase b1) des vernetzten Kautschuks B, die bevorzugt eine Glasübergangstemperatur von < 0°C, bevorzugt < -10°C, besonders bevorzugt < -15°C, aufweist, ist überwiegend aus Acrylaten (zu 80 bis 100 Gew.-%, bevorzugt 90 bis 100 Gew.-%, besonders bevorzugt 95 bis 100 Gew.-%) Acrylaten, insbesondere Butylacrylat und/oder Ethylhexylacrylat, aufgebaut. Diese Kautschukphase b1) kann weitere Monomere b1.2), insbesondere Methacrylate, Styrol und/oder Acrylnitril enthalten. Besonders bevorzugte Monomere b1.2) sind polyfunktionelle vernetzende Monomere, die vorzugsweise aus der folgenden Gruppe ausgewählt sind: Divinylbenzol, Diallylmaleat, Diallylfumarat, Diallylphthalat, Allylmethycrylat, Triallylisocyanurat, Butadien, Isopren, Dihydrodicyclopentadienylacrylat, besonders bevorzugt Dihydrodicyclopentadienylacrylat.

Die Kautschukphase b1) wird durch Emulsionspolymerisation der Monomere oder durch Miniemulsionspolymerisation hergestellt.

Der Kautschuk B besitzt mindestens eine weitere Phase, hergestellt durch Polymerisieren von
b2.1) 60 bis 85 Gew.-%, bevorzugt 70 bis 80 Gew.-% Styrol,
b2.2) 15 bis 35 Gew.-%, bevorzugt 20 bis 30 Gew.-% Acrylnitril und
b2.3) 0 bis 20 Gew.-% weitere Monomere in Gegenwart der ersten Phase.

Als weitere Monomere b2.3) sind dieselben Stoffe geeignet, wie zu b1.2) als weitere Monomere für die erste Phase aufgeführt. Die zweite Phase b2) ist in der Regel die äußere Phase des Kautschuks B, d.h. der Kautschuk B liegt in der Regel als Kern/Hülle-Polymer vor, wobei dieser Aufbau jedoch nicht zwingend ist.

Die Kautschukphase b2) ist bevorzugt verträglich oder teilverträglich mit der Matrixkomponente A der thermoplastischen Formmassen.

Zusätzlich kann der Kautschuk B weitere Polymerphasen aufweisen, insbesondere aus Polystyrol und seinen Copolymeren, vorzugsweise aus Polystyrol und Vernetzern und/oder pfropfaktiven Monomeren. Diese Phasen können an äußeren Hüllen ausgebildet sein oder aber auch die Kerne der mehrphasigen Kautschukteilchen B bilden.
Die Messung der Viskositätzahl des Polymers A erfolgt nach DIN 53726 an einer 0,5%igen Lösung des Polymerisats in Dimethylformamid bei 23°.
Die Bestimmung der Durchmesser der Kautschukteilchen B sowie deren Anzahl erfolgte mit der analytischen Ultrazentrifuge entsprechend der Methode von W. Scholtan und H. Lange, Kolloid-Z. und Z.-Polymere 250 (1972) Seiten 782 bis 796. Die Ultrazentrifugenmessung liefert die integrale Massenverteilung oder Zahlenverteilung des Teilchendurchmessers einer Probe. Hieraus läßt sich entnehmen, wieviel Zahlen- oder Gewichtsprozent der Teilchen einen Durchmesser gleich oder kleiner einer bestimmten Größe haben.

Weist der Kautschuk B eine dritte Phase auf, besteht diese bevorzugt aus mindestens 80 Gew.-% Styrol und /oder seiner Derivate. Sie bildet bevorzugt den Kern oder eine Zwischenhülle der Polymerteilchen.

Die thermoplastischen Formmassen haben bevorzugt einen Schmelzindex von mindestens 2 ml/10 min, bevorzugt von mindestens 4 ml/10 min. Der Schmelzindex wurde nach ISO 1133 bei 220°C und 10 kg bestimmt.

Die Erfindung betrifft weiterhin Formstoffe, insbesondere Profile, Folien oder Platten, hergestellt durch Coextrusion von 0,1 bis 50 Gew.-%, bevorzugt 2 bis 20 Gew.-% Formmassen nach einem der Ansprüche 1 bis 3, und 50 bis 99,9 Gew.-%, bevorzugt 80 bis 98 Gew.-% einer zweiten thermoplastischen Formmasse, gebildet aus einem der folgenden Polymere: ABS, PVC, HIPS, SAN, ASA+ PC oder ABS + PC.

Als Formstoffe werden dabei in bekannter Weise die Verarbeitungsprodukte von Formmassen, insbesondere Formteile und Halbzeug, bezeichnet.
In bevorzugter Weise liegt das Verhältnis der Schmelzindizes der ersten zur zweiten Formmasse, gemäß nach ISO 1133 bei 220°C und 10 kg im Bereich von 0,5 bis 10, besonders bevorzugt im Bereich von 1 bis 10.

Bevorzugt ist der Acrylnitrilgehalt der ersten Formmasse größer als der Acrylnitrilgehalt der zweiten Formmasse.

Besonders geeignet sind Formstoffe, deren Kautschukteilchen B eine Netzwerkmorphologie aufweisen, d.h. daß mindestens 80 Zahlen-% der Teilchen jeweils einen Berührungspunkt mit einem anderen Teilchen aufweisen.

Die erfindungsgemäße Aufgabe wird auch durch Abmischungen aus den vorstehend definierten thermoplastischen Formmassen mit bis zu 45 Gew.-% thermoplastischen Formmassen erreicht, die denselben chemischen Aufbau aufweisen, wobei jedoch die Viskositätszahl des Polymers A wie auch die Größe der Kautschukteilchen B beliebig sein können.

Gegenstand der Erfindung ist auch ein Verfahren zur Herstellung von Formstoffen durch Coextrusion, wobei die coextrudierten Formteile bevorzugt tiefgezogen werden und wobei in bevorzugter Weise die Verarbeitungstemperatur der ersten Formmasse bei 200 bis 300°C, insbesondere bei 210 bis 280°C, liegt.

Die erfindungsgemäßen Formmassen eignen sich insbesondere zur Herstellung von Fensterprofilen, Gehäusen, Bekleidungsteilen, Abdeckungen, Booten, Dächern oder Dachkoffern.

Die Erfindung wird im folgenden anhand von Ausführungsbeispielen näher erläutert. Mit einem Einschnecken-Hauptextruder, Schneckendurchmesser 90 mm, Extruderlänge gleich dem 30fachen Schneckendurchmesser, bei einer Temperatur von 190°C in der Einzugzone, von 260 bis 270°C in der Düse und im Feedblock und einem Durchsatz von circa 150 kg/h sowie mit einem Einschnecken-Coextruder, Schneckendurchmesser 45 mm, Extruderlänge gleich dem 25fachen Schneckendurchmesser, und einer Temperatur von 210°C in der Einzugszone und von 260 bis 270°C in der Düse und im Feedblock wurden Platten mit 100 cm Breite sowie einer Schichtdicke von 4 mm ABS und 0,8 mm ASA coextrudiert.
Die Beurteilung der Oberflächenmattigkeit erfolgte durch Glanzmessung nach DIN 67530 bei einem Meßwinkel von 60°. Gemessen wurde der Glanz der ASA-Schicht, wobei ein Glanz < 30% als optisch matt beurteilt wurde.

Das Erscheinungsbild bezüglich Fließlinien wurde visuell beurteilt.

### Beispiele 1 bis 5 (Vergleich)

Eingesetzt wurde eine erste thermoplastische Formmasse (ASA1) aus 55 Gew.-% Polystyrolacrylnitril mit der Viskositätszahl 80 ml/g und einem Acrylnitrilgehalt von 35% sowie aus 45 Gew.-% monodispersem Butylacrylat-Pfropfkautschuk mit einer Teilchengröße von 0,5 µm. Der Pfropfkautschuk wurde nach dem Emulsionspolymerisationsverfahren hergestellt: In einer ersten Polymerisationsstufe wurde eine Mischung aus Butylacrylat (BA) und Dihydrodicyclopentadienylacrylat (DCPA) im Gewichtsverhältnis 98 : 2 polymerisiert. In einer weiteren Polymerisationsstufe wurden die in der ersten Stufe erhaltenen Kautschukteilchen mit Styrol (S) und Acrylnitril (AN) gepfropft. Das Gewichtsverhältnis SAN : BA + DCPA betrug 40 : 60. Nach der Herstellung der Kautschukdispersion hatten mehr als 99 Zahlen-% der Kautschukteilchen einen Durchmesser > 0,2 µm. Die Teilchengrößenverteilung der Dispersion wurde mit der Ultrazentrifuge gemessen.

Die Pfropfkautschukdispersion wurde koaguliert und der schleuderfeuchte Kautschuk mit einer PSAN-Schmelze bei 260°C in einem ZSK-Extruder der Firma Werner und Pfleiderer abgemischt.

In den Vergleichsbeispielen 1 bis 5 wurde die erste thermoplastische Formmasse ASA 1 unverändert gelassen und mit jeweils verschiedenen, zweiten, ABS-Formmassen, wie nachfolgend aufgeführt, coextrudiert:

### Beispiel 1:

ABS 1: Viskositätszahl der Matrix 80 ml/g, Acrylnitrilgehalt der Matrix 24%, Kautschukgehalt 30%, Schmelzindex bei 220°C und 10 kg = 6 ml/10 min und gewichtsmittlerer Durchmesser von 0,35 µm.

### Beispiel 2:

ABS 2: Viskositätszahl der Matrix 80 ml/g, Acrylnitrilgehalt der Matrix 24%, Kautschukgehalt 40%, Schmelzindex bei 220°C und 10 kg = 3 ml/10 min und gewichtsmittlerer Durchmesser = 0,35 µm.

### Beispiel 3:

ABS 3: Viskositätszahl der Matrix 80 ml/g, Acrylnitrilgehalt der Matrix 35 Gew.-%, Kautschukgehalt 28%, Schmelzindex bei 220° und 10 kg = 4,5 ml/10 min und gewichtsmittlerer Durchmesser von 0,35 µm.

### Beispiel 4:

ABS 4: Viskositätszahl der Matrix 80 ml/g, Acrylnitrilgehalt der Matrix 33 %, Kautschukgehalt 46 %, gewichtsmittlerer Durchmesser von 0,35 µm.

### Beispiel 5:

ABS 5: Cycolac® GPX 3700 der Firma General Electric Plastics. In sämtlichen Vergleichsbeispielen 1 bis 5 wurden glänzende Plattenoberflächen erhalten.

In den weiteren Vergleichsbeispielen, 6 bis 10, wurde als erste thermoplastische Formmasse eine Formmasse ASA 2 aus 55 Gew.-% Polystyrolacrylnitril mit einer Viskositätszahl von 80 ml/g und einem Acrylnitrilgehalt von 35 % sowie 45 Gew.-% Butylacrylat-Pfropfkautschuk mit einer Teilchengröße von 0,1 µm eingesetzt. Das Gewichtsverhältnis SAN:BA+DCPA betrug 40:60. Die Formmasse wurde in derselben Weise wie ASA 1 hergestellt. In der erhaltenen ASA 2-Dispersion hatten mehr als 99 Zahlen-% der Teilchen einen Durchmesser < 0,2 µm.

Die Formmasse ASA 2 wurde anschließend mit jeder der oben aufgeführten zweiten Formmassen ABS 1 bis ABS 5 jeweils coextrudiert. In allen Beispielen 6 bis 10 waren die Oberflächen der coextrudierten Platten matt, zeigten aber Fließlinien.

### Beispiele 11 bis 15 (erfindungsgemäß)

Als erste Formmasse (ASA 3) wurde ein Gemisch aus 55 Gew.-% Polystyrol-Acrylnitril mit einer Viskositätzahl von 60 ml/g und einem Acrylnitrilgehalt von 35 % sowie 45 Gew.-% Butylacrylat-Pfropfkautschuk hergestellt. Der Butylacrylat-Pfropfkautschuk war derselbe wie bei ASA 2. Die erste Formmasse ASA 3 wurde anschließend der Reihe nach mit jeweils einer der oben aufgeführten Formmassen ABS 1 bis 5 als zweite Formmasse coextrudiert. In allen Beispielen 11 bis 15 wurden coextrudierte Platten erhalten, mit matten, von Fließlinien freien Oberflächen.

## Patentansprüche

1. Thermoplastische Formmassen, enthaltend
A) 20 bis 90 Gew.-%, bevorzugt 30 bis 80 Gew.-%, besonders bevorzugt 40 bis 75 Gew.-% eines thermoplastischen Polymers, aufgebaut aus Einheiten, die sich ableiten von
a1) 60 bis 85 Gew.-%, bevorzugt 63 bis 81 Gew.-%, besonders bevorzugt 65 bis 80 Gew.-% Styrol und/oder substituiertes Styrol, insbesondere α-Methylstyrol,
a2) 15 bis 40 Gew.-%, bevorzugt 19 bis 37 Gew.-%, besonders bevorzugt 20 bis 35 Gew.-% Acrylnitril und
a3) 0 bis 25 Gew.-%, bevorzugt 0 bis 20 Gew.-%, besonders bevorzugt 0 bis 18 Gew.-% weiteren mit a1 und a2 copolymerisierbaren Monomeren und
B) 10 bis 80 Gew.-%, bevorzugt 20 bis 70 Gew.-%, besonders bevorzugt 25 bis 60 Gew.-% eines mehrphasigen, vernetzten Pfropfkautschuks aufgebaut aus
b1) 30 bis 90 Gew.-%, bevorzugt 40 bis 70 Gew.-%, besonders bevorzugt 45 bis 70 Gew.-% einer Phase, hergestellt durch Emulsions- oder Miniemulsionspolymerisation von
b1.1) 80 bis 100 Gew.-%, bevorzugt 90 bis 100 Gew.-%, besonders bevorzugt 95 bis 100 Gew.-% eines Acrylats und
b1.2) 0 bis 20 Gew.-%, bevorzugt 0 bis 10 Gew.-%, besonders bevorzugt 0 bis 5 Gew.-% weiteren Monomeren und
b2) 10 bis 70 Gew.-%, bevorzugt 30 bis 60 Gew.-%, besonders bevorzugt 30 bis 55 Gew.-% mindestens einer weiteren Phase, hergestellt durch Polymerisieren von
b2.1) 60 bis 85 Gew.-%, bevorzugt 70 bis 80 Gew.-% Styrol,
b2.2) 15 bis 35 Gew.-%, bevorzugt 20 bis 30 Gew.-% Acrylnitril und
b2.3) 0 bis 20 Gew.-% weitere Monomere in Gegenwart der ersten Phase, wobei das Polymer A eine Viskositätszahl, gemessen als 0,5 %-ige Lösung in Dimethylformamid bei 23°C (DIN 53726), von 50 bis 70 ml/g, bevorzugt von 55 bis 65 ml/g, aufweist und wobei mindestens 80 Zahlen-%, bevorzugt mindestens 85 Zahlen-%, besonders bevorzugt mindestens 90 Zahlen-% der Kautschukteilchen B in der Dispersion nach ihrer Herstellung einen Durchmesser von < 0,2 µm, bevorzugt < 0,18 µm, besonders bevorzugt < 0,15 µm (Ultrazentrifugenmessung nach Scholtan und lange), besitzen.

2. Thermoplastische Formmassen nach Anspruch 1, **dadurch gekennzeichnet, daß** der Kautschuk B eine dritte Phase aufweist, die bevorzugt durch Polymerisieren von mindestens 80 Gew.-% Styrol und/oder seiner Derivate hergestellt wird.

3. Thermoplastische Formmassen nach Anspruch 1 oder 2, **gekennzeichnet durch** einen Schmelzindex von mindestens 2 ml/10 min, bevorzugt von mindestens 4 ml/10 min (nach ISO 1133 bei 220°C und 10 kg).

4. Abmischungen aus thermoplastischen Formmassen nach einem der Ansprüche 1 bis 3, mit bis zu 45 Gew.-% thermoplastischen Formmassen, die denselben chemischen Aufbau aufweisen, wobei jedoch die Viskositätszahl des Polymers A wie auch die Größe der Kautschukteilchen B beliebig sein können.

5. Formstoffe, insbesondere Profile, Folien oder Platten, hergestellt durch Coextrusion von 0,1 bis 50 Gew.-%, bevorzugt 2 bis 20 Gew.-% Formmassen nach einem der Angrüche 1 bis 3, und 50 bis
99,9 Gew.-%, bevorzugt 80 bis 98 Gew.-% einer zweiten thermoplastischen Formmasse, gebildet aus einem der folgenden Polymere: ABS, PVC, HIPS, SAN, ASA + PC oder ABS + PC.

6. Formstoffe nach Anspruch 5, **gekennzeichnet durch** ein Verhältnis der Schmelzindizes (gemäß ISO 1133 bei 220°C und 10 Kg). der ersten zur zweiten Formmasse von 0,5 bis 10, bevorzugt von 1 bis 10.

7. Formstoffe nach Anspruch 5 oder 6, **dadurch gekennzeichnet, daß** der Acrylnitrilgehalt der ersten Formmasse größer ist als Acrylnitrilgehalt der zweiten Formmasse.

8. Formstoffe nach einem der Ansprüche 5 bis 7, **dadurch gekennzeichnet, daß** die Teilchen des Kautschuks B eine Netzwerkmorphologie aufweisen.

9. Verfahren zur Herstellung von Formstoffen nach einem der Ansprüche 5 bis 8 durch Coextrusion.

10. Verfahren nach Anpruch 9, **dadurch gekennzeichnet, daß** die coextrudierten Formteile tiefgezogen werden.

11. Verfahren nach Anspruch 9 oder Anspruch 10, **dadurch gekennzeichnet, daß** die Verarbeitungstemperatur der ersten Formmasse bei 200 bis 300°C, vorzugsweise bei 210 bis 280°C, liegt

## Claims

1. A thermoplastic molding composition comprising
A) from 20 to 90% by weight, preferably from 30 to 80% by weight, particularly preferably from 40 to 75% by weight, of a thermoplastic polymer composed of units deriving from
a1) from 60 to 85% by weight, preferably from 63 to 81% by weight, particularly preferably from 65 to 80% by weight, of styrene and/or substituted styrene, in particular α-methylstyrene,
a2) from 15 to 40% by weight, preferably from 19 to 37% by weight, particularly preferably from 20 to 35% by weight, of acrylonitrile, and
a3) from 0 to 25% by weight, preferably from 0 to 20% by weight, particularly preferably from 0 to 18% by weight, of other monomers copolymerizable with a1 and a2, and
B) from 10 to 80% by weight, preferably from 20 to 70% by weight, particularly preferably from 25 to 60% by weight, of a crosslinked graft rubber having two or more phases and composed of
b1) from 30 to 90% by weight, preferably from 40 to 70% by weight, particularly preferably from 45 to 70% by weight, of a phase prepared by emulsion or miniemulsion polymerization of
b1.1) from 80 to 100% by weight, preferably from 90 to 100% by weight, particularly preferably from 95 to 100% by weight, of an acrylate, and
b1.2) from 0 to 20% by weight, preferably from 0 to 10% by weight, particularly preferably from 0 to 5% by weight, of other monomers, and
b2) from 10 to 70% by weight, preferably from 30 to 60% by weight, particularly preferably from 30 to 55% by weight, of at least one other phase prepared by polymerizing
b2.1) from 60 to 85% by weight, preferably from 70 to 80% by weight, of styrene,
b2.2) from 15 to 35% by weight, preferably from 20 to 30% by weight, of acrylonitrile and
b2.3) from 0 to 20% by weight of other monomers, in the presence of the first phase,
where the polymer A has a viscosity number, measured on a 0.5% strength solution in dimethylformamide at 23°C (DIN 53726), of from 50 to 70 ml/g, preferably from 55 to 65 ml/g, and at least 80% by number, preferably at least 85% by number, particularly preferably at least 90% by number, of the rubber particles B in the dispersion, after the preparation thereof, have a diameter of < 0.2 µm, preferably < 0.18 µm, particularly preferably < 0.15 µm (ultracentrifuge measurement in accordance with Scholtan and Lange).

2. A thermoplastic molding composition as claimed in claim 1, wherein the rubber B has a third phase, which is preferably prepared by polymerizing at least 80% by weight of styrene and/or of its derivatives.

3. A thermoplastic molding composition as claimed in claim 1 or 2, which has a melt flow rate of at least 2 ml/10 min, preferably at least 4 ml/10 min (in accordance with ISO 1133 at 220°C and 10 kg).

4. A blend of the thermoplastic molding composition as claimed in any one of claims 1 to 3 with up to 45% by weight of thermoplastic molding compositions which have the same chemical structure but any desired viscosity number of the polymer A and any desired size of the rubber particles B.

5. A molded material, in particular a profile, film or sheet, produced by coextruding from 0.1 to 50% by weight, preferably from 2 to 20% by weight, of a molding composition as claimed in any one of claims 1 to 3, and from 50 to 99.9% by weight, preferably from 80 to 98% by weight, of a second thermoplastic molding composition formed from one of the following polymers: ABS, PVC, HIPS, SAN, ASA + PC or ABS + PC.

6. A molded material as claimed in claim 5, in which the ratio of the melt flow (in accordance with ISO 1133 at 220°C and 10 kg) of the first molding composition to that of the second is from 0.5 to 10, preferably from 1 to 10.

7. A molded material as claimed in claim 5 or 6, wherein the acrylonitrile content of the first molding composition is greater than the acrylonitrile content of the second molding composition.

8. A molded material as claimed in any one of claims 5 to 7, wherein the particles of the rubber B have network morphology.

9. A process for producing molded materials as claimed in any one of claims 5 to 8 by coextrusion.

10. A process as claimed in claim 9, wherein the coextruded moldings are thermoformed.

11. A process as claimed in claim 9 or 10, wherein the processing temperature for the first molding composition is from 200 to 300°C, preferably from 210 to 280°C.

## Revendications

1. Masses de moulage thermoplastiques, contenant
A) 20 à 90% en poids, de préférence 30 à 80% en poids, particulièrement avantageusement 40 à 75% en poids, d'un polymère thermoplastique, constitué d'unités qui dérivent
a1) de 60 à 85% en poids, de préférence de 63 à 81% en poids, particulièrement avantageusement de 65 à 80% en poids, de styrène et/ou de styrène substitué, en particulier d'α-méthytstyrène,
a2) de 15 à 40% en poids, de préférence de 19 à 37% en poids, particulièrement avantageusement de 20 à 35% en poids, d'acrylonitrile, et
a3) de 0 à 25% en poids, de préférence de 0 à 20% en poids, particulièrement avantageusement de 0 à 18% en poids, d'autres monomères copolymérisables avec a1 et a2, et
B) 10 à 80% en poids, de préférence 20 à 70% en poids, particulièrement avantageusement 25 à 60% en poids, d'un caoutchouc de greffage réticulé, polyphasique, à base
b1) de 30 à 90% en poids, de préférence de 40 à 70% en poids, particulièrement avantageusement de 45 à 70% en poids, d'une phase préparée par polymérisation en émulsion ou en miniémulsion de
b1.1) 80 à 100% en poids, de préférence 90 à 100% en poids, particulièrement avantageusement 95 à 100% en poids, d'un acrylate et de
b1.2) 0 à 20% en poids, de préférence 0 à 10% en poids, particulièrement avantageusement 0 à 5% en poids, d'autres monomères, et
b2) de 10 à 70% en poids, de préférence de 30 à 60% en poids, particulièrement avantageusement de 30 à 55% en poids, d'au moins une autre phase préparée par polymérisation de
b2.1) 60 à 85% en poids, de préférence 70 à 80% en poids, de styrène,
b2.2) 15 à 35% en poids, de préférence 20 à 30% en poids, d'acrylonitrile et
b2.3) 0 à 20% en poids d'autres monomères, en présence de la première phase,
le polymère A présentant un indice de viscosité, mesuré sous la forme d'une solution à 0,5% dans du diméthylformamide à 23°C (DIN 53726), de 50 à 70 ml/g, de préférence de 55 à 65 ml/g, et au moins 80% en nombre, de préférence au moins 85% en nombre, particulièrement avantageusement au moins 90% en nombre, des particules de caoutchouc B dans la dispersion présentant après leur préparation un diamètre de <0,2 µm, de préférence de <0,18 µm, particulièrement avantageusement de <0,15 µm (mesure à ultracentrifugation selon Scholtan et Lange).

2. Masses de moulage thermoplastiques suivant la revendication 1, **caractérisées en ce que** le caoutchouc B présente une troisième phase, qui est préparée de préférence par polymérisation d'au moins 80% en poids de styrène et/ou de ses dérivés.

3. Masses de moulage thermoplastiques suivant l'une des revendications 1 et 2, **caractérisées par** un indice de fusion d'au moins 2 ml/10 minutes, de préférence d'au moins 4 ml/10 minutes (selon ISO 1133 à 220°C et 10 kg).

4. Mélanges à base de masses de moulage thermoplastiques suivant l'une des revendications 1 à 3, comprenant jusqu'à 45% en poids de masses de moulage thermoplastiques qui présentent la même structure chimique, l'indice de viscosité du polymère A ainsi que la grosseur des particules de caoutchouc B pouvant cependant être quelconques.

5. Demi-produits façonnés, en particulier profilés, feuilles ou plaques, préparés par coextrusion de 0,1 à 50% en poids, de préférence de 2 à 20% en poids, de masses de moulage suivant l'une des revendications 1 à 3, et de 50 à 99,9% en poids, de préférence de 80 à 98% en poids, d'une deuxième masse de moulage thermoplastique, formée à partir d'un des polymères suivants : ABS, PVC, HIPS, SAN, ASA + PC ou ABS + PC.

6. Demi-produits façonnés suivant la revendication 5, **caractérisés par** un rapport entre l'indice de fusion (selon ISO 1133 à 220°C et 10 kg) de la première masse de moulage et celui de la deuxième masse de moulage de 0,5 à 10, de préférence de 1 à 10.

7. Demi-produits suivant l'une des revendications 5 et 6, **caractérisés en ce que** la teneur en acrylonitrile de la première masse de moulage est plus grande que la teneur en acrylonitrile de la deuxième masse de moulage.

8. Demi-produits de façonnage suivant l'une des revendications 5 à 7, **caractérisés en ce que** les particules du caoutchouc B présentent une morphologie de réseau.

9. Procédé de préparation de demi-produits de façonnage suivant l'une des revendications 5 à 8, par coextrusion.

10. Procédé suivant la revendication 9, **caractérisé en ce que** les pièces façonnées coextrudées sont embouties.

11. Procédé suivant l'une des revendications 9 et 10, **caractérisé en ce que** la température de traitement de la première masse de moulage est de 200 à 300°C, de préférence de 210 à 280°C.
